Europäisches Patentamt

European Patent Office

Office européen des brevets

(11) Numéro de publication: **0 643 495 A1**

## DEMANDE DE BREVET EUROPEEN

(21) Numéro de dépôt: **94202564.4**

(22) Date de dépôt: **07.09.94**

(51) Int. Cl.⁶: **H04B 3/23**

(30) Priorité: **13.09.93 FR 9310871**

(43) Date de publication de la demande:
**15.03.95 Bulletin 95/11**

(84) Etats contractants désignés:
**DE FR GB IE**

(71) Demandeur: **T.R.T. TELECOMMUNICATIONS
RADIOELECTRIOUES ET TELEPHONIOUES
88, rue Brillat Savarin
F-75013 Paris (FR)**

(84) **FR**

(71) Demandeur: **PHILIPS ELECTRONICS N.V.
Groenewoudseweg 1
NL-5621 BA Eindhoven (NL)**

(84) **DE GB IE**

(72) Inventeur: **Hachem, Walid, Société Civile
S.P.I.D.
156, Boulevard Haussmann
F-75008 Paris (FR)**
Inventeur: **Lamballe, Philippe, Société Civile
S.P.I.D.
156, Boulevard Haussmann
F-75008 Paris (FR)**
Inventeur: **Picart, Catherine, Société Civile
S.P.I.D.
156, Boulevard Haussmann
F-75008 Paris (FR)**

(74) Mandataire: **Chaffraix, Jean
Société Civile S.P.I.D.
156, Boulevard Haussmann
F-75008 Paris (FR)**

(54) **Modem avec gain optimal dans l'adaptation du suppresseur d'écho.**

(57) Le modem du système comporte un accès d'émission de données (45) pour émettre des symboles vers un équipement distant, un accès de réception (46) pour recevoir des symboles provenant de cet équipement distant, des moyens d'annulation d'écho constitués par des moyens de filtrage (50, 54) à coefficients réglables et par un moyen de déphasage (56) en cascade pour fournir des informations provenant dudit accès d'émission, filtrées déphasées à un moyen de soustraction (58, 52) pour enlever aux données de l'accès de réception lesdites informations filtrées déphasées, un moyen de commande pour agir sur les moyens de filtrage et le moyen de déphasage pour annuler en sortie du moyen de soustraction un écho éventuel.

Ce procédé propose les étapes suivantes :
- estimation de l'énergie de l'écho pendant un temps correspondant à un cetain nombre de symboles,
- affectation de cette énergie à un nombre de forme simple
- poursuite du réglage des coefficients et de l'organe de déphasage au moyen de ladite affectation.

Application : transmission de données.

FIG.2

La présente invention concerne un système de transmission comprenant un modem comportant un accès d'émission de données pour émettre des symboles vers un équipement distant, un accès de réception pour recevoir des symboles provenant de cet équipement distant, des moyens d'annulation d'écho constitués par des moyens de filtrage à coefficients réglables et par un moyen de déphasage en cascade pour fournir des informations provenant dudit accès d'émission, filtrées déphasées, à un moyen de soustraction pour enlever aux données de l'accès de réception lesdites informations filtrées déphasées, un moyen de commande pour agir sur les moyens de filtrage et le moyen de déphasage pour annuler en sortie du moyen de soustraction un écho éventuel surgissant entre le modem et l'équipement distant.

La présente invention concerne également un modem dans lequel le procédé est mis en oeuvre.

Un procédé de ce genre et un modem dans lequel il est mis en oeuvre est décrit dans la demande de brevet européen n° 0 334 442. Bien que ce modem décrit donne entière satisfaction il s'est avéré que sa période de mise en route a été jugée encore un peu trop longue. Cette période de mise en route qui consiste en un dialogue entre l'équipement distant et le modem est un préalable nécessaire avant la transmission de données utiles entre les utilisateurs. Ceci est décrit dans les normes V32 et V32bis du C.C.I.T.T notamment.

La présente invention vise à perfectionner la demande de brevet ci-dessus mentionnée, c'est-à-dire à diminuer encore la durée de cette phase de mise en route, ou à diminuer l'erreur de phase pour une même durée de mise en route.

Pour cela, un tel modem est remarquable en ce que pendant la mise en route, il est prévu pour ledit moyen de commande des étapes suivantes :
- estimation de l'énergie de l'écho pendant un temps correspondant à un certain nombre de symboles,
- affectation de cette énergie à un nombre
- poursuite du réglage de l'organe de déphasage au moyen de ladite affectation.

La description suivante faite en regard des dessins ci-annexés, le tout donné à titre d'exemple non limitatif, fera bien comprendre comment l'invention peut être réalisée.

La figure 1 montre un modem conforme à l'invention.

La figure 2 est un schéma fonctionnel pour expliquer le fonctionnement de l'invention.

La figure 3 est un graphe montrant dans le domaine de l'échantillonnage la correction de la phase.

La figure 4 est un graphe en correspondance de celui de la figure 3, montrant dans le domaine de la fréquence la correction de la phase.

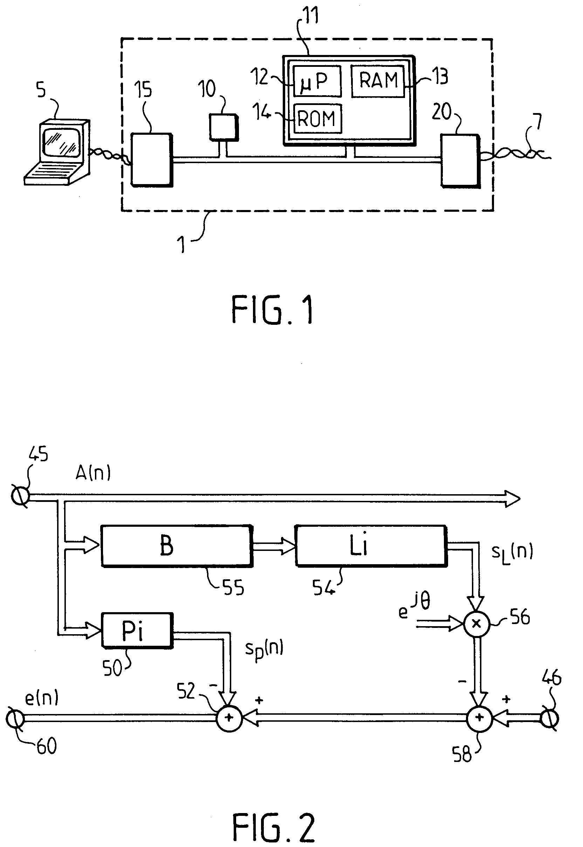

Le modem sur la figure 1 porte la référence 1, il interconnecte un terminal de type numérique 5 à une ligne de transmission du genre ligne téléphonique 7. Ce modem est constitué à partir d'ensembles à microprocesseur 10 et 11. L'ensemble 10 est affecté à la gestion du modem et l'ensemble 11 comporte, de la manière habituelle, un microprocesseur 12, une mémoire vive de travail 13 et une mémoire morte 14 contenant les instructions qui permettent la mise en oeuvre de l'invention. Un premier circuit d'interface 15 permet la liaison entre le modem 1 et le terminal 5. Un second circuit d'interface 20 permet de transformer d'une part les signaux en provenance de la ligne téléphonique 7 en signaux numériques et d'autre part de faire l'opération contraire. Un tel circuit est décrit dans le brevet européen EP 0 318 105.

L'ensemble 11 effectue différentes fonctions et notamment celle d'annulation d'écho. Cette fonction est illustrée sous forme de blocs fonctionnels à la figure 2.

Sur cette figure la référence 45 représente l'accès des données A(n) qui sont destinées à être émises. Ces données apparaisent en des instants définis par "n" ou plutôt nT. Ces données peuvent être suréchantillonnées par rapport à la fréquence baud des données émises de sorte que l'on peut écrire :

$$n = n'. R$$

où n' représente la période d'apparition des symboles et R le facteur de suréchantillonnage. Dans ce cas, on aurait R sousannuleurs d'écho. La référence 46 indique l'accès sur lequel les données sont reçues. La référence 50 représente un filtre transversal qui multiplie par des constantes évolutives différents échantillons des données transmises A(n) décalées dans le temps. Ce filtre 50 a pour but de simuler un écho proche de sorte qu'un organe de soustraction 52 permet d'enlever les signaux néfastes dus à l'écho proche grâce à la contribution du filtre 50.

La référence 54 représente un autre filtre transversal qui multiplie par des constantes évolutives différents échantillons des données transmises A(n) décalées dans le temps. Ce filtre 54 a pour but de simuler un écho lointain. Comme ces échos lointains sont soumis à une certaine dérive en fréquence un organe de déphasage rattrape cette dérive. Il est représenté sur la figure 2 sous la forme d'un organe de multiplication 56 qui multiplie les signaux de sortie du filtre 54 par $e^{j\theta}$. Un organe 55 amenant un retard pur permet de faire travailler dans de bonnes conditions le filtre 54. On constitue ainsi une réplique d'un écho lointain de sorte qu'un organe de soustraction 58 permet d'enlever les signaux néfastes dus à cet écho lointain.

A la sortie du filtre 54, on a un signal :

$$s_L(n) = \sum_{i=0}^{M-1} L_i(n).A(n-B-i) \qquad (1)$$

où

$L_i$ sont les coefficients du filtre

M leur nombre

B est le retard apporté par l'organe 55.

D'une manière similaire, on a à la sortie du filtre 50 un signal :

$$s_P(n) = \sum_{i=0}^{M'-1} P_i(n).A(n-i) \qquad (2)$$

où

$P_i$ sont les coefficients du filtre

M' leur nombre.

Lorsqu'on se trouve dans la phase de mise en route, il est prévu un laps de temps pendant lequel l'équipement distant reste silencieux et donc n'émet aucune donnée. Ainsi le signal reçu R(n) représente le signal d'écho que les annuleurs d'écho vont essayer d'annuler, il en résulte un signal d'erreur finale :

$$e(n) = R(n) - s_L(n).e^{j\hat{\theta}(n)} - s_P(n) \qquad (3)$$

où

$$\hat{\theta}(n)$$

représente la phase de l'écho estimé.

Pour ajuster la valeur des coefficients $L_i$ et $P_i$, on utilise la méthode du gradient stochastique telle que décrite dans la section 18 de l'ouvrage intitulé : "DIGITAL COMMUNICATION" de E. A. LEE et D.G. MESSERSCHIMITT édité par KLUWER ACADEMIC PUBLISHER (Londres- GB).

Par exemple, les valeurs des coefficients $L_i$ sont données par :

$$L_i(n+1) = L_i(n) + \alpha e(n)\overline{A}(n-B-i) \qquad (4)$$

$\overline{A}$ est la valeur conjuguée $\alpha$ est le gain d'adaptation, il contrôle la vitesse de convergence, l'erreur quadratique décroît exponentiellement jusqu'à atteindre un niveau résiduel dû principalement au bruit. La constante de temps de cette décroissante est donnée par :

$$\tau = T/(2\alpha\sigma^2)$$

où

$\sigma^2 = E[|A|^2]$ représente la puissance des données émises.

Quant à la phase, elle est déterminée au moyen d'une fonction de coût I(n) qui considère la partie imaginaire d'une quantité :

$$I(n) = \Im m\,[\overline{s}_L(n).e^{j-\hat{\theta}(n)}.e(n)] \qquad (5)$$

qui peut se mettre aussi sous la forme :

$$E(I(n)) \;=\; E_0 \sin(\theta(n) - \hat{\theta}(n)) \;\approx\; E_0[\theta(n) - \hat{\theta}(n)]$$

On définit alors le processus pour établir la valeur

$$\hat{\theta}(n) \;.$$

Ce processus est décrit dans l'article intitulé : "A Phase Adaptive Structure for Echo Cancellation" de R.D. Gitlin et J.S. Thompson et paru dans la revue I.E.E.E. Transaction on communication, Vol. Com-26, n°8 Août 1978. On se rapportera aux formules 6.9 et 6.10.

$$\Delta\hat{\theta}(n+1) \;=\; \Delta\hat{\theta}(n) + g_2 I(n)$$
$$\hat{\theta}(n+1) \;=\; \hat{\theta}(n) + \Delta\hat{\theta}(n) + g_1 I(n) \tag{6}$$

où $g_1$ et $g_2$ sont des constantes qui définissent l'évolution du processus et $E_0$ est la puissance de l'écho c'est à dire :

$$E_0 \;=\; E[|S_L(n)|^2] \tag{7}$$

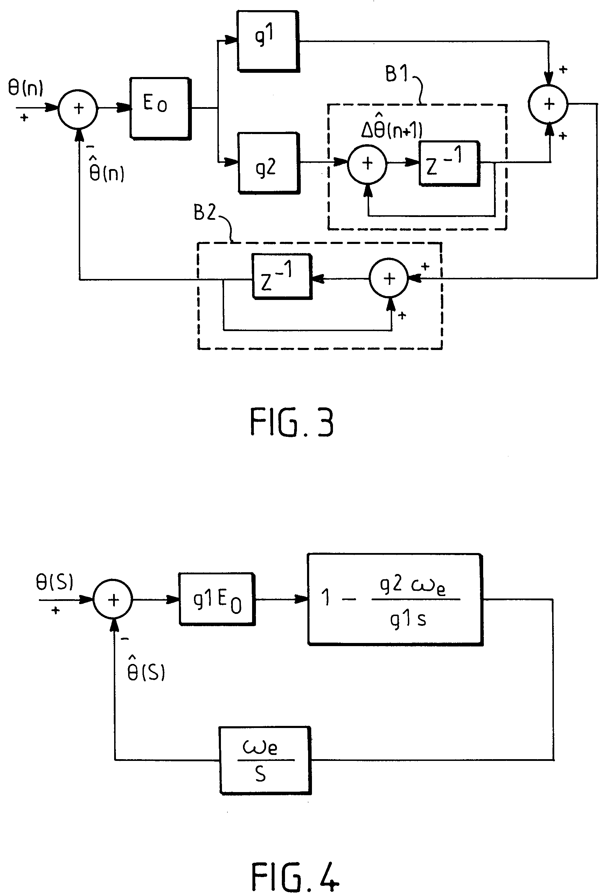

en supposant l'estimation $S_L(n)$ exacte. L'équation (6) peut se mettre sous forme de graphe comme cela est représenté à la figure 3. En subsistant la fonction d'intégration telle que montrée sur les blocs B1 et B2 on obtient le graphe de la figure 4 où :

$\omega_e$ est l'impulsion représentant la fréquence d'échantillonnage c'est à dire : $\omega_e = 2\pi/T$
et s l'opérateur laplacien.
On en déduit donc la fonction de transfert :

$$\frac{\theta(s) - \hat{\theta}(s)}{\theta(s)} = \frac{s^2}{s^2 + g_1 E_0 \omega_e s + g_2 \omega_e^2 E_0} \tag{8}$$

d'où en faisant apparaître le facteur d'amortissement $\zeta$ et la fréquence naturelle $\omega_n$ :

$$\frac{\theta(s) - \hat{\theta}(s)}{\theta(s)} = \frac{s^2}{s^2 + 2\zeta\omega_n s + \omega_n^2} \tag{9}$$

et en identifiant on obtient :

$$\omega_n \;=\; \sqrt{g_2 E_0}\; \omega_e$$
$$\zeta \;=\; \frac{g_1 E_0}{2\sqrt{g_2 E_0}} \tag{10}$$

On se rend compte que la convergence et la stabilité de la boucle dépendent étroitement de la puissance de l'écho.
L'invention propose donc :

- une constante de temps :

$$\tau \ll 1/\Delta f_{MAX}$$

La valeur $\Delta f_{MAX}$ représente la dérive maximale en fréquence de l'écho lointain et ne peut excéder 1 Hz lorsqu'on affaire avec les équipement satisfaisant les normes du C.C.I.T.T. donc : $\Delta f_{MAX} = 1$ Hz
- un gain $\alpha$ égal au gain optimal $\alpha_{opt}$ tel que donné dans l'ouvrage précité

$$\alpha_{opt} = 1 / (M\sigma^2)$$

ce qui donne en principe :

$$\tau = \frac{MT}{2} \qquad\qquad (11)$$

- une estimation de l'énergie $E_0$ pendant une première étape de convergence qui est utilisée donc pour la mise en oeuvre du processus décrit.
Cette énergie est évaluée de la manière suivante :

$$\hat{E}_0(n+1) = (1-\lambda)\hat{E}_0(n) + \lambda |s_L(n)|^2 \qquad\qquad (12)$$

où $\lambda$ est la constante d'intégration.
Cette évaluation est effectuée au rythme échantillon c'est-à-dire R fois par symbole.
La durée de cette étape dure environ 500 symboles. Pendant cette étape, l'algorithme de récupération de phase est dévalidé.
- La détermination d'un entier p tel que :

$$K\,2^{-p} > \hat{E}_0 \geq K\,2^{-(p-1)} \qquad\qquad (13)$$

où K est la dynamique selon laquelle l'écho lointain peut être estimé, en d'autre termes K représente le nombre maximum d'éléments binaires selon lequel l'énergie de l'écho est estimée, en pratique 18 éléments binaires sur un format de mot de 24 éléments binaires, K se trouve encadré à 3 dB près.
Pendant une troisième étape on démarre le processus avec des gains :

$$g_1 = G_1\,2^P$$
$$g_2 = G_2\,2^P$$

où les paramètres $G_1$ et $G_2$ sont définis pour $E_0 = K$,
les gains $G_1$ et $G_2$ décroissent par paliers pendant cette étape en gardant :

$$\zeta = 0,7$$

(on n'a pas utilisé $\omega_n = 0,5\,\omega_e$)
En variante, pour être encore plus rapide, l'invention propose de ne considérer que les M/2 coefficients centraux de l'annuleur d'écho pendant la première étape. Alors la convergence de l'annuleur est plus rapide et il peut estimer des énergies pour des décalages de phase supérieurs à 1 Hz -voir la relation (11). L'estimation de $E_0$ n'en est pas affectée puisque les coefficients centraux sont les plus importants.
La méthode proposée consiste à mesurer l'énergie moyenne du signal reçu pendant la première phase de la séquence de synchronisation du modem tel que décrit dans les normes du C.C.I.T.T. Une fois cette énergie mesurée, le gain d'adaptation des phases suivantes de la séquence de synchronisation est alors sélectionné.

**Revendications**

1. Système de transmission comprenant un modem comportant un accès d'émission de données pour émettre des symboles vers un équipement distant, un accès de réception pour recevoir des symboles provenant de cet équipement distant, des moyens d'annulation d'écho constitués par des moyens de filtrage à coefficients réglables et par un moyen de déphasage en cascade pour fournir des informations provenant dudit accès d'émission, filtrées déphasées à un moyen de soustraction pour enlever aux données de l'accès de réception lesdites informations filtrées déphasées, un moyen de commande pour agir sur les moyens de filtrage et le moyen de déphasage pour annuler en sortie du moyen de soustraction un écho éventuel surgissant entre le modem et l'équipement distant, caractérisé en ce que pendant la mise en route, il est prévu pour ledit moyen de commande les étapes suivantes :
   - estimation de l'énergie de l'écho pendant un temps correspondant à un certain nombre de symboles,
   - affectation de cette énergie à un nombre
   - poursuite du réglage de l'organe de déphasage au moyen de ladite affectation.

2. Système selon la revendication 1 impliquant des traitements numériques sur des mots ayant un certain format, caractérisé en ce que cette affectation est effectuée de la manière suivante :

$$K2^{-p} > \hat{E}_0 \geq K2^{-p-1}$$

   où K est liée audit format.

3. Système selon la revendication 1 ou 2 dans lequel l'organe de déphasage est réglé selon le processus défini par :

$$\Delta\hat{\theta}(n+1) \quad = \quad \Delta\hat{\theta}(n) + g_2 I(n)$$

$$\hat{\theta}(n+1) \quad = \quad \hat{\theta}(n) + \Delta\hat{\theta}(n) + g_1 I(n)$$

   caractérisé en ce que :

   g1 = G1 $2^p$
   g2 = G2 $2^p$

   où G1 et G2 sont les coefficients optimaux pour un écho d'une puissance correspondant à K.

4. Système selon l'une des revendications 1 à 3 caractérisé en ce que un nombre réduit des coefficients dudit filtre est considéré durant au moins une partie desdites étapes.

5. Modem comportant un accès d'émission de données pour émettre des symboles vers un équipement distant, un accès de réception pour recevoir des symboles provenant de cet équipement distant, des moyens d'annulation d'écho constitués par des moyens de filtrage à coefficients réglables et par un moyen de déphasage en cascade pour fournir des informations provenant dudit accès d'émission, filtrées déphasées à un moyen de soustraction pour enlever aux données de l'accès de réception lesdites informations filtrées déphasées, un moyen de commande pour agir sur les moyens de filtrage et le moyen de déphasage pour annuler en sortie du moyen de soustraction un écho éventuel surgissant entre le modem et l'équipement distant, caractérisé en ce que pendant la mise en route, il est prévu pour ledit moyen de commande les étapes suivantes :
   - estimation de l'énergie de l'écho pendant un temps correspondant à un certain nombre de symboles,
   - affectation de cette énergie à un nombre
   - poursuite du réglage de l'organe de déphasage au moyen de ladite affectation.

FIG.1

FIG.2

FIG. 3

FIG. 4

Office européen
des brevets

**RAPPORT DE RECHERCHE EUROPEENNE**

Numero de la demande

EP 94 20 2564

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP-A-0 096 936 (TELECOMMUNICATIONS RADIOELECTRIQUES ET TELEPHONIQUES T.R.T.) <br> * page 3, ligne 13 - page 5, ligne 7 * <br> * page 5, ligne 1 - page 6, ligne 1 * <br> --- | 1 | H04B3/23 |
| A | IEEE TRANSACTIONS ON COMMUNICATIONS, vol.36, no.3, Mars 1988, NEW YORK US pages 364 - 372 <br> WANG & WERNER 'Performance Analysis of an Echo-Cancellation Arrangement that Compensates for Frequency Offset in the Far Echo' <br> * page 366, colonne de gauche, ligne 12 - page 370, colonne de gauche, ligne 37 * <br> --- | 1,3 | |
| A | EP-A-0 366 584 (I.B.M. CORP.) <br> * page 4, ligne 38 - ligne 52 * <br> ----- | 1 | |
| | | | **DOMAINES TECHNIQUES RECHERCHES (Int.Cl.6)** |
| | | | H04B <br> H04M |

Le présent rapport a été établi pour toutes les revendications

| Lieu de la recherche | Date d'achèvement de la recherche | Examinateur |
|---|---|---|
| LA HAYE | 19 Décembre 1994 | Bossen, M |

EPO FORM 1503 03.82 (P04C02)